# DEMANDE DE BREVET EUROPEEN

(11) **EP 0 821 179 A1**
(43) Date de publication de la demande: **28.01.1998**
(21) Numéro de dépôt: 97401754.3
(22) Date de dépôt: 21.07.1997
(51) Int. Cl.: F16D 65/097

(54) **Dispositif formant plaque de support d'au moins une plaquette de garniture de frein pour frein à disque de véhicule**

(30) Priorité: 22.07.1996 FR 9609174
(71) Demandeur: Alliedsignal Materiaux de Friction, 93700 Drancy (FR)
(72) Inventeur: Le Bris, Jean-Pierre, 95100 Argenteuil (FR)
(74) Mandataire: Thinat, Michel

(57) **Abrégé**

La présente invention concerne un dispositif formant plaque de support d'au moins une plaquette de garniture de frein pour frein à disque de véhicule.

Le dispositif est caractérisé en ce qu'une plaque anti-bruit (3) est assemblée à la plaque porte-garniture (1) par un bossage central plein (4) de la plaque de support (1) et s'engageant dans une fenêtre de forme conjugée (5) de la plaque anti-bruit (3).

L'invention trouve application pour les freins à disques de véhicules automobiles.

## Description

La présente invention concerne un dispositif formant plaque de support d'au moins une plaquette de garniture de frein pour un frein à disque de véhicule.

On connaît un tel dispositif qui comprend, au dos de la plaque porte-garniture, une plaque anti-bruit ou anti-vibration fixée à la plaque de support généralement par un adhésif à base de caoutchouc.

Cette plaque anti-bruit est destinée à absorber les vibrations susceptibles de se produire lors du freinage du véhicule et se traduisant par des bruits désagréables.

Cependant, la chaleur produite par le frottement de la plaquette de garniture de frein sur le disque de frein peut être extrêmement élevée, de l'ordre de 500°C, et peut se propager, par l'intermédiaire de la plaque porte-garniture, jusqu'à la plaque anti-bruit. Un tel dégagement de chaleur a tendance à ramollir l'adhésif de fixation de la plaque anti-bruit à la plaque porte-garniture de sorte que les couples de freinage risquent de provoquer le glissement, voir même la séparation, de la plaque anti-bruit relativement à la plaque porte-garniture.

Un tel problème se pose également lorsque la plaque anti-bruit est fixée à la plaque porte-garniture par tout autre moyen car les couples de freinage ont toujours tendance à déplacer la plaque anti-bruit relativement à la plaque porte-garniture.

La présente invention a pour but d'éliminer l'inconvénient ci-dessus des dispositifs connus en proposant un dispositif permettant de maintenir efficacement la plaque anti-bruit malgré un ramollissement de l'adhésif de liaison de celle-ci à la plaque de support de la plaquette de garniture de frein.

A cet effet, le dispositif de l'invention formant plaque de support d'au moins une plaquette de garniture de frein pour frein à disque de véhicule, comprenant, au dos de la plaque de support opposé à la plaque de garniture, une plaque anti-bruit fixée à la plaque de support, est caractérisé en ce que la plaque anti-bruit est de plus assemblée à la plaque de support par au moins un moyen solidaire de la plaque de support empêchant un déplacement de la plaque anti-bruit relativement à la plaque de support dans un plan sensiblement parallèle au plan de la plaque de support lorsque l'adhésif de fixation de la plaque anti-bruit ramollit suite à un échauffement résultant des frottements de la plaquette de garniture sur le disque de frein.

De préférence, le moyen d'assemblage comprend un bossage formant îlot dont la grandeur transversale hors tout parallèlement au plan de la plaque de support est supérieure à sa hauteur saillante par rapport à la plaque de support et s'engageant dans une fenêtre ou ouverture de forme conjuguée de la plaque anti-bruit.

Selon un mode de réalisation, le bossage est central, unique, plein ou massif, de forme rectangulaire et est parallèle ou normal à une direction tangentielle de la plaque de support courbe.

Selon un autre mode de réalisation, le dispositif comprend deux bossages identiques cylindriques creux disposés sur un même axe parallèle à une direction tangentielle à la courbure de la plaque de support symétriquement au plan de symétrie transversal de la plaque de support.

Avantageusement, chaque bossage comprend un rebord périphérique en appui sur la face externe de la plaque anti-bruit pour maintenir celle-ci contre la plaque de support.

Le bossage central précité est réalisé par estampage de façon que l'empreinte formée à l'opposé du bossage serve de moyen de retenue supplémentaire de la plaquette de garniture de frein.

La plaque de support est empilable sur une autre plaque de support identique pour le stockage de plaques de support et sont positionnées l'une par rapport à l'autre par le bossage de l'une encastrée dans l'empreinte de l'autre.

Cette empreinte présente avantageusement une dépouille périphérique permettant de faciliter le retrait d'une plaque de support d'en dessous de la plaque de support adjacente supérieure.

Les deux bossages cylindriques creux sont réalisés concentriquement respectivement à deux perçages de la plaque de support dans chacun desquels est coulée de la matière de la garniture de frein lors du moulage de celle-ci à la plaque de support.

Deux lamages sont réalisés respectivement concentriquement aux deux perçages à la face de la plaque de support opposée aux deux bossages cylindriques creux et ont chacun une paroi latérale inclinée formant chanfrein.

De préférence, la hauteur saillante d'un bossage en affleurement avec la plaque anti-bruit est comprise entre environ 0,4 mm et environ 1,5 mm.

L'invention sera mieux comprise et d'autres buts, caractéristiques, détails et avantages de celle-ci. apparaîtront plus clairement dans la description explicative qui va suivre faite en référence aux dessins schématiques annexés donnés uniquement à titre d'exemple illustrant trois modes de réalisation de l'invention et dans lesquels :

La figure 1 est une vue en perspective d'un dispositif formant plaque de support d'au moins une plaquette de garniture de frein pour frein à disque de véhicule conforme à l'invention.

La figure 2 est une vue de dessus de la plaque porte-garniture de frein.

La figure 3 est une vue partielle en coupe agrandie suivant la ligne III-III de la figure 2.

La figure 4 est une vue de dessus de la plaque anti-bruit seule utilisée avec la plaque porte-garniture de la figure 2.

La figure 5 est une vue de dessus de la plaque porte-garniture de frein suivant un deuxième mode de réalisation de l'invention.

La figure 6 est une vue partielle en coupe agrandie suivant la ligne VI-VI de la figure 5.

La figure 7 est une vue de dessus de la plaque anti-bruit seule utilisée avec la plaque porte-garniture de la figure 5.

La figure 8 est une vue de dessus de la plaque porte-garniture suivant un troisième mode de réalisation de l'invention.

La figure 9 est une vue en coupe suivant la ligne IX-IX de la figure 8.

La figure 10 est une vue de dessus de la plaque anti-bruit seule utilisée avec la plaque porte-garniture de la figure 8.

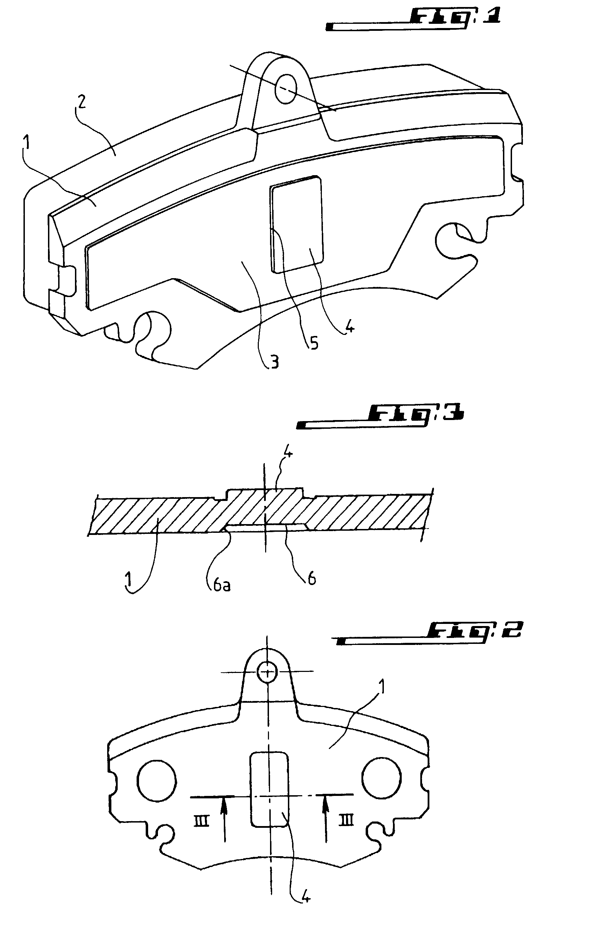

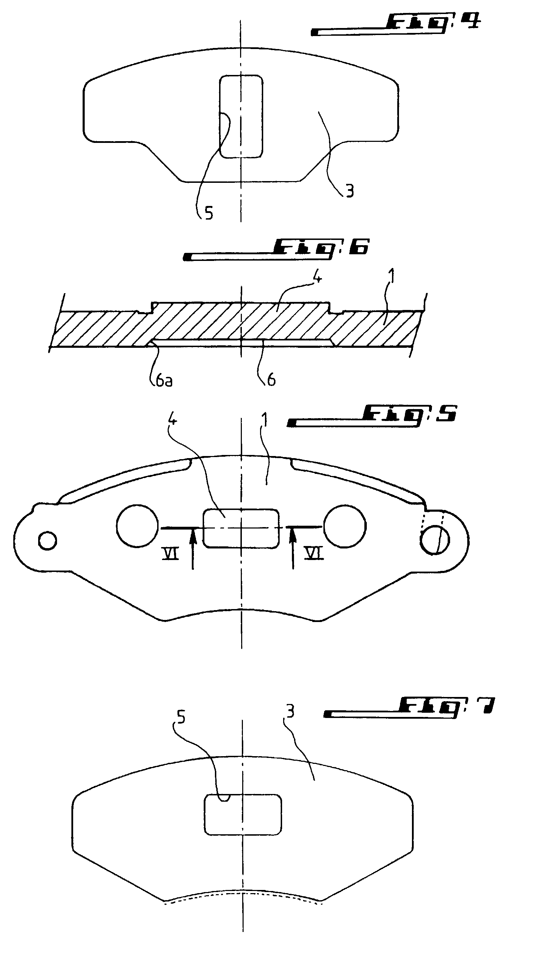

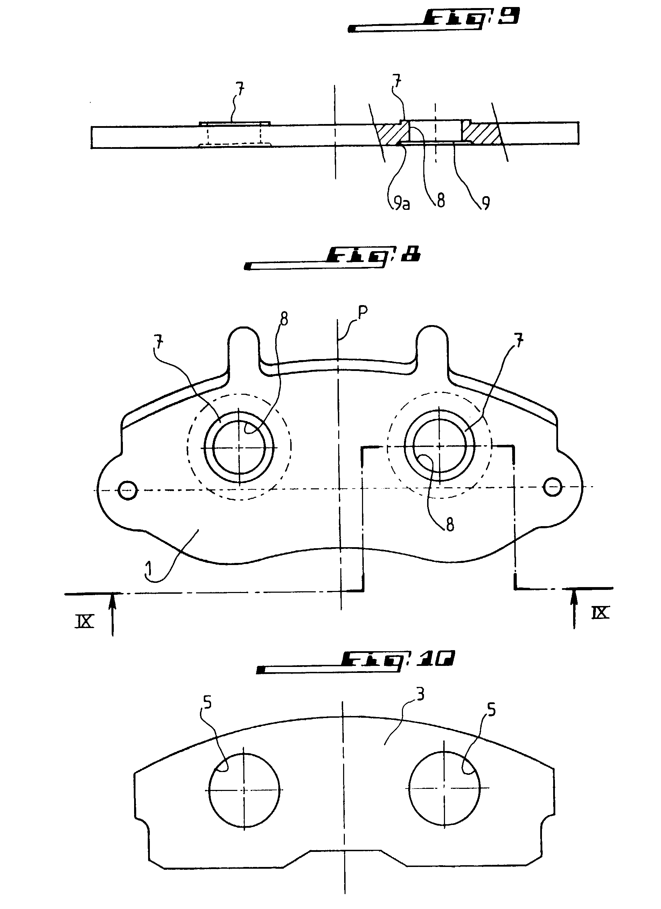

En se reportant aux figures 1 à 4 relatives au premier mode de réalisation de l'invention, la référence 1 désigne une plaque de support d'au moins une plaquette de garniture de frein 2 faisant partie d'un dispositif de frein à disque de véhicule automobile comprenant essentiellement un étrier à l'intérieur duquel se déplacent, sous l'action d'au moins un piston, des plaquettes de garniture de frein pour effectuer un serrage, sur un secteur limité, du disque de frein solidaire de la roue.

Comme représenté, deux plaquettes de garniture de frein 2 sont fixées à la plaque de support 1 et, comme cela est connu en soi, une plaque anti-bruit ou anti-vibration 3 est fixée au dos de la plaque de support 1 opposé aux plaquettes de garniture de frein 2 par un adhésif à base de caoutchouc (non représenté). Cependant, la plaque anti-bruit pourrait être fixée par tout autre moyen que de la colle mais une plaque de caoutchouc sera alors interposée entre la plaque anti-bruit et la plaque porte-garniture.

Selon l'invention, la plaque anti-bruit 3 est de plus assemblée à la plaque de support 1 par un bossage 4 solidaire de la plaque 1 et s'engageant dans une fenêtre de forme conjuguée 5 de la plaque anti-bruit 3 en étant en affleurement avec la face externe de la plaque 3. Le bossage 4 est plein ou massif, de forme rectangulaire et est réalisé dans la partie centrale de la plaque de support 1 en étant normal à une direction tangentielle à la courbure de la plaque de support 1. De plus, le bossage 4 forme un îlot dont la grandeur ou la dimension extérieure transversale hors tout parallèlement au plan de la plaque de support 1 est supérieure à sa hauteur saillante par rapport à la plaque 1. De préférence, la hauteur saillante du bossage 4 est comprise entre environ 0,4 mm et environ 1,5 mm.

Lorsque l'ensemble constitué par la plaque de support 1, les plaquettes de garniture de frein 2 et la plaque anti-bruit 3 est monté dans l'étrier du frein à disque, lors du freinage, le frottement des plaquettes de frein 2 sur le disque de frein produisent de la chaleur qui se propage jusqu'à la plaque anti-bruit 3 avec risque de ramollissement concomitant de l'adhésif à base de caoutchouc liant la plaque anti-bruit 3 à la plaque de support 1. Dans ces conditions, les couples résultant du freinage s'appliquant sur la plaque anti-bruit 3 ont tendance à déplacer la plaque anti-bruit 3 relativement à la plaque de support 1 dans un plan sensiblement parallèle au plan de la plaque 1, risquant ainsi d'arracher la plaque anti-bruit 3. Le bossage 4 est conçu pour empêcher tout déplacement relatif de la plaque anti-bruit 3 lors d'un ramollissement éventuel de l'adhésif de liaison de la plaque anti-bruit 3 à la plaque de support 1.

Bien que cela ne soit pas représenté, le bossage 4 peut comporter avantageusement un rebord périphérique, obtenu par exemple par matage, et venant en appui sur le bord périphérique correspondant de la fenêtre 5 de la plaque 3 de manière à empêcher celle-ci de s'écarter de la plaque de support 1.

Le bossage 4 peut être réalisé par estampage avec ainsi formation d'une empreinte 6 dans la face de la plaque de support 1 opposée au bossage 4. L'empreinte 6 permet de recevoir de la matière fondue de la garniture de frein lors du moulage de celle-ci à la plaque de support 1, ce qui permet de réaliser un moyen de retenue supplémentaire des plaquettes de garniture 2 à la plaque de support 1. De plus, la présence de l'empreinte 6 permet un empilage précis des plaques identiques à la plaque de support 1 avec un bossage 4 d'une plaque s'encastrant dans l'empreinte 6 d'une plaque adjacente supérieure, ce qui facilite le stockage par gerbage de plaques de support 1 avant de les saisir de préférence automatiquement les unes après les autres pour les acheminer à l'emplacement de fabrication par moulage des plaques de garniture de frein solidarisées à la plaque de support correspondante. L'extraction d'une plaque de support 1 d'en dessous d'une autre plaque de support adjacente supérieure peut être facilitée par la présence d'une dépouille périphérique 6a de l'empreinte 6.

Le second mode de rélisation de l'invention tel que représenté aux figures 5 à 7 ne diffère de celui décrit précédemment en référence aux figures 1 à 4 que par l'orientation du bossage 4 qui, selon ce second mode de réalisation, est parallèle à une direction tangentielle de la plaque de support courbe 1. A part cette différence, le bossage 4 de ce second mode de réalisation a les mêmes caractéristiques que celui du premier mode de réalisation et en présente les mêmes avantages.

Selon le troisième mode de réalisation de l'invention représenté aux figures 8 à 10, la plaque de support 1 comprend deux bossages identiques 7 chacun en forme de cylindre creux et disposés sur un même axe parallèle à une direction tangentielle à la courbure de la plaque de support 1 en étant symétriques au plan de symétrie P transversal à la plaque de support 1, c'est-à-dire perpendiculaire au plan de la figure 8. Chaque bossage cylindrique creux 7, comme le bossage 4 des précédents modes de réalisation, forme un îlot dont la grandeur transversale hors tout parallèlement au plan de la plaque de support 1 est supérieure à sa hauteur saillante par rapport à la plaque de support 1 et la hauteur saillante de chaque bossage 7 en affleurement avec la plaque anti-bruit 3 est également comprise entre environ 0,4 mm et environ 1,5 mm. Chaque bossage 7 peut également comporter un rebord périphérique circulaire ou collerette (non représenté), obtenu par exemple par matage, venant en appui sur le bord circulaire correspondant de l'ouverture 5 de la plaque anti-bruit 3 à travers laquelle est engagé ce bossage. De préférence, les deux bossages cylindriques 7 sont réalisés concentriquement respectivement à deux perçages 8 de la plaque de support 1 et dans chacun desquels est coulée de la matière de la garniture de frein 2 lors du moulage de celle-ci à la plaque 1 de façon à assurer une meilleure tenue des plaquettes de frein 2 à la plaque de support 1. L'emplacement des deux bossages 7 tient compte des emplacements des deux pistons de commande du déplacement des garnitures de frein utilisés avec le type de plaque porte-garnitures 1 de la figure 8 et qui coiffent les deux bossages sans être gênés par ces derniers. La figure 9 montre également que la face de la plaque de support 1 opposée au bossage correspondant 7 comporte un lamage 9 à paroi latérale inclinée formant chanfrein 9a ayant les mêmes fonctions de gerbage et de facilité d'extraction de chaque plaque de support 1 d'en dessous une plaque de support adjacente supérieure que celles mentionnées en référence aux premier et second modes de réalisation de l'invention.

Le dispositif ci-dessus décrit de l'invention permet ainsi de maintenir efficacement la plaque anti-bruit en l'empêchant de glisser relativement à la plaque de support correspondante lors d'un ramollissement de son adhésif de liaison à cette plaque de support et consécutif à un échauffement à température élevée lors d'un freinage.

## Revendications

1. Dispositif formant plaque de support (1) d'au moins une plaquette de garniture de frein (2) pour frein à disque de véhicule comprenant, au dos de la plaque de support (1) opposé à la plaque de garniture (2), une plaque anti-bruit (3) fixée à la plaque de support (1), caractérisé en ce que la plaque anti-bruit (3) est de plus assemblée à la plaque de support (1) par au moins un moyen (4 ; 7) solidaire de la plaque de support (1) empêchant un déplacement de la plaque anti-bruit (3) relativement à la plaque de support (1) dans un plan sensiblement parallèle au plan de la plaque de support (1) lorsque l'adhésif de fixation de la plaque anti-bruit (3) ramollit suite à un échauffement résultant des frottements de la plaquette de garniture (2) sur le disque de frein.

2. Dispositif selon la revendication 1, caractérisé en ce que le moyen d'assemblage précité comprend un bossage (4) formant îlot dont la grandeur transversale hors tout parallèlement au plan de la plaque de support (1) est supérieure à sa hauteur saillante par rapport à la plaque de support et s'engageant dans une fenêtre ou ouverture de forme conjugée (5) de la plaque anti-bruit (3).

3. Dispositif selon la revendication 2, caractérisé en ce que le bossage (4) précité est central, unique, plein ou massif, de forme rectangulaire et est parallèle ou normal à une direction tangentielle de la plaque de support courbe (1).

4. Dispositif selon la revendication 1, caractérisé en ce que le moyen d'assemblage précité comprend deux bossages identiques cylindriques creux (7) disposés sur un même axe parallèle à une direction tangentielle à la courbure de la plaque de support (1) symétriquement au plan de symétrie transversal (P) de la plaque de support (1), chaque bossage (7) formant îlot dont la grandeur transversale hors tout parallèlement au plan de la plaque de support (1) est supérieure à sa hauteur saillante par. rapport à la plaque de support et s'engageant dans une ouverture de forme conjuguée (5) de la plaque anti-bruit (3).

5. Dispositif selon l'une des revendications 2 à 4, caractérisé en ce que chaque bossage (4 ; 7) précité comprend un rebord périphérique en appui sur la face externe de la plaque anti-bruit (3) pour maintenir celle-ci contre la plaque de support (1).

6. Dispositif selon la revendication 3, caractérisé en ce que le bossage central (4) est réalisé par estampage de façon que l'empreinte (6) formée à l'opposé du bossage (4) serve de moyen de retenue supplémentaire de la plaquette de garniture de frein (2).

7. Dispositif selon la revendication 6, caractérisé en ce que la plaque de support (1) est empilable sur une autre plaque de support identique pour le stockage de plaques de support et sont positionnées l'une par rapport à l'autre par le bossage (4) de l'une encastré dans l'empreinte (6) de l'autre.

8. Dispositif selon la revendication 6 ou 7, caractérisé en ce que l'empreinte (6) précitée présente une dépouille périphérique (6a).

9. Dispositif selon la revendication 4, caractérisé en ce que les deux bossages cylindriques creux (7) précités sont réalisés concentriquement respectivement à deux perçages (8) de la plaque de support (1) et dans chacun desquels est coulée de la matière de la garniture de frein (2).

10. Dispositif selon la revendication 9, caractérisé en ce que deux lamages (9) sont réalisés respectivement concentriquement aux deux perçages (8) à la face de la plaque de support (1) opposée aux deux bossages cylindriques creux (7) et ont chacun une paroi latérale inclinée formant chanfrein (9a).

11. Dispositif selon l'une des revendications 2 à 9, caractérisé en ce que la hauteur saillante du bossage (4 ; 7) en affleurement avec la plaque anti-bruit (3) est comprise entre environ 0,4 mm et environ 1,5 mm.
